(19) Europäisches Patentamt
European Patent Office
Office européen des brevets

(11) EP 3 318 589 A1

(12) EUROPEAN PATENT APPLICATION

(43) Date of publication:
**09.05.2018 Bulletin 2018/19**

(51) Int Cl.:
*C08G 61/12 (2006.01)* *H01B 1/12 (2006.01)*
*C08L 65/00 (2006.01)* *C08L 25/18 (2006.01)*

(21) Application number: **16196938.1**

(22) Date of filing: **02.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Heraeus Deutschland GmbH & Co. KG**
**63450 Hanau (DE)**

(72) Inventors:
- **Guntermann, Udo**
**47800 Krefeld (DE)**
- **Lövenich, Wilfried**
**51469 Bergisch Gladbach (DE)**
- **Scheel, Arnulf**
**50735 Köln (DE)**

(74) Representative: **Herzog, Fiesser & Partner Patentanwälte PartG mbB**
**Immermannstrasse 40**
**40210 Düsseldorf (DE)**

# (54) PEDOT/PSS WITH COARSE PARTICLE SIZE AND HIGH PEDOT-CONTENT

(57) The present invention relates to a liquid composition comprising
i) particles comprising a complex of a polythiophene and a polyanion, and
ii) at least one solvent;
wherein
a) the liquid composition comprises at least 30 wt.-% of the polythiophene, based on the total weight of the polythiophene and the polyanion, and
b) the weight average particle diameter ($d_{50}$) of particles i) is in the range from 10 nm to 2,000 nm.

The present invention also relates to a process for the preparation of a liquid composition, to a liquid composition obtainable by such a process, to a process for the preparation of a layered body, to a layered body obtainable by such a process and to the use of a liquid composition.

EP 3 318 589 A1

## Description

The present invention relates to a composition which comprises at least one solvent and particles comprising a complex of a conductive polymer and a polyanion, to a process for the preparation of a liquid composition, to a liquid composition obtainable by such a process, to a process for the preparation of a layered body, the layered body obtainable by such a process and to the use of a composition.

Conductive polymers are increasingly gaining economic importance, since polymers have advantages over metals with respect to processability, weight and targeted adjustment of properties by chemical modification. Examples of known $\pi$-conjugated polymers are polypyrroles, polythiophenes, polyanilines, polyacetylenes, polyphenylenes and poly(p-phenylene-vinylenes). Layers of conductive polymers are employed in diverse industrial uses, e.g. as polymeric counter-electrodes in capacitors or for through-plating of electronic circuit boards. The preparation of conductive polymers is carried out chemically or electrochemically by oxidation from monomeric precursors, such as e.g. optionally substituted thiophenes, pyrroles and anilines and the particular optionally oligomeric derivatives thereof. In particular, chemically oxidative polymerization is widely used, since it is easy to realize industrially in a liquid medium or on diverse substrates.

A particularly important polythiophene which is used industrially is poly(3,4-ethylenedioxythiophene) (PEDOT or PEDT), which is described, for example, in EP 0 339 340 A2 and is prepared by chemical polymerization of 3,4-ethylenedioxythiophene (EDOT or EDT), and which has very high conductivities in its oxidized form. An overview of numerous poly(3,4-alkylenedioxythiophene) derivatives, in particular poly(3,4-ethylenedioxythiophene) derivatives, and their monomer units, syntheses and uses is given by A. Elschner, S. Kirchmeyer, W. Lövenich, U. Merker, K. Reuter "PEDOT Principles and Applications of an Intrinsically Conductive Polymer", CRC Press 2011. Often 3,4-ethylenedioxythiophene is polymerized in water in the presence of polyanions such as polystyrene sulfonate (PSS), whereby aqueous compositions are obtained containing a complex of the cationic polythiophene and the polyanion (often referred to as "PEDOT/PSS"). Such a process is, for example, disclosed in in EP 0 440 957 A2. Due to the polyelectrolyte properties of PEDOT as a polycation and PSS as a polyanion, these compositions are not a true solution, but rather a dispersion. The extent to which polymers or parts of the polymers are dissolved or dispersed in this context depends on the weight ratio of the polycation and the polyanion, on the charge density of the polymers, on the salt concentration of the environment and on the nature of the surrounding medium (V. Kabanov, Russian Chemical Reviews 74, 2005, 3-20).

PEDOT/PSS-dispersions have acquired particular industrial importance. Transparent, conductive films which have found a large number of uses, e.g. as antistatic coatings or as conductive layers in electronic components, for examples as a hole injection layer in organic light-emitting diodes (OLED) or as an intermediate layer in organic photovoltaic elements (OPV elements). They are also commonly used for the formation of conductive polymers layer, in particular solid electrolyte layers or polymeric outer layers, in the production of solid electrolyte capacitors.

For most of the above applications high conductivities are required for the conductive polymer layers. To achieve these high conductivities, conductivity improving additives are often comprised in the dispersions, usually in the form of high boiling solvents such as DMSO. Such compositions are, for example, disclosed in WO 2014/063825 A1. However, the disadvantage of the prior art compositions has to be seen in the fact that, although they allow the formation of highly conductive polymer layers, when forming conductive polymer layers from these dispersions the drying times are often too long and the drying temperatures are too high, both effects leading to increased production costs.

The present invention was based on the object of overcoming the disadvantages resulting from the prior art in connection with liquid compositions comprising conductive polymers, in particular with PEDOT/PSS-dispersions.

In particular, the present invention was based on the object of providing a liquid composition comprising conductive polymers, wherein this liquid composition allows the formation of highly conductive polymers layers with reduced drying times, compared to the compositions known form the prior art.

Furthermore, the present invention was based on the object of providing a liquid composition comprising conductive polymers, wherein this liquid composition allows the formation of highly conductive polymers layers with reduced drying times, even if the compostions are supplemented with high concentrations of polymeric binders.

It was also an object of the present invention to provide a process by means of which such an advantageous liquid composition can be prepared.

EMBODIMENTS

|1| A liquid composition comprising

i) particles comprising a complex of a polythiophene and a polyanion, and
ii) at least one solvent;

wherein

a) the liquid composition comprises at least 30 wt.-%, more preferably at least 35 wt.-% and most preferably at least 40 wt.-% of the polythiophene, in each case based on the total weight of the polythiophene and the polyanion, and
b) the weight average particle diameter ($d_{50}$) of particles i) is in the range from 10 nm to 2,000 nm, more preferably in the range from 30 nm to 1,000 nm, more preferably in the range from 250 nm to 900 nm and most preferably in the range from 260 nm to 500 nm.

|2| The liquid composition according to embodiment |1|, wherein the liquid composition comprises less than 1,000 ppm, more preferably less than 100 ppm, more preferably less than 10 ppm and even more preferably less than 1 ppm of solvents having a boiling point (determined at 1,013.25 mbar) of more than 100°C, in each case based on the total mass of the liquid composition.

|3| The liquid composition according to embodiment |2|, wherein the liquid composition does not comprise solvents having a boiling point (determined at 1,013.25 mbar) of more than 100°C.

|4| The liquid composition according to anyone of embodiments |1| to |3|, wherein the polythiophene is poly(3,4-ethylenedioxythiophene).

|5| The liquid composition according to anyone of embodiments |1| to |4|, wherein the polyanion is an anion of polystyrene sulfonic acid.

|6| The liquid composition according to anyone of embodiments |1| to |5|, wherein the complex is a complex of poly(3,4-ethylenedioxythiophene) and an anion of polystyrene sulfonic acid (PEDOT/PSS).

|7| The liquid composition according to anyone of embodiments |1| to |6|, wherein a conductive layer prepared from the composition has a conductivity of at least 50 S/cm, preferably at least 70 S/cm, more preferably at least 85 S/cm and most preferably at least 110 S/cm.

|8| The liquid composition according to anyone of embodiments |1| to |7|, wherein the liquid composition comprises water or a mixture of water and an alcohol selected from the group consisting of methanol, ethanol, n-propanol and isopropanol as solvent ii).

|9| The liquid composition according to anyone of embodiments |1| to |8|, wherein the liquid composition comprises the complex of a polythiophene and a polyanion in an amount of 0.001 to 2.5 wt.-%, preferably 0.05 to 1.0 wt.-% and more preferably 0.01 to 0.5 wt.-%, in each case based on the total weight of the liquid composition.

|10| The liquid composition according to anyone of embodiments |1| to |9|, wherein, wherein the liquid composition further comprises

iii) at least one further polymer being different from the polythiophene and the polyanion.

|11| The liquid composition according to embodiment |10|, wherein the at least one further polymer iii) is binder selected from the group consisting of polyvinyl alcohols, polyvinylpyrrolidones, polyvinyl chlorides, polyvinyl acetates, polyvinyl butyrates, polyacrylic esters, polyacrylamides, polymethacrylic esters, polymethacrylamides, polyacrylonitriles, styrene/acrylic ester, vinyl acetate/acrylic ester, ethylene/vinyl acetate copolymers, polybutadienes, polyisoprenes, polystyrenes, polyethers, polyesters, sulfonated polyesters, polycarbonates, polyurethanes, polyamides, polyimides, polysulfones, melamine-formaldehyde resins, epoxy resins, silicone resins, silane resins, celluloses or a mixture of at least two of these binders.

|12| The liquid composition according to embodiment |11|, wherein the binder is a water-soluble binder.

|13| The liquid composition according to embodiment |12|, wherein the water-soluble binder is a sulfonated polyester.

|14| The liquid composition according to anyone of embodiments |10| to |13|, wherein the mass content of the at least one further polymer iii) in the liquid composition is at least 5 times, preferably at least 10 times, more preferably at least 15 times and most preferably at least 20 times larger than the total mass content of the polythiophene and

the polyanion in the liquid composition.

|15| The liquid composition according to embodiment |14|, wherein a conductive layer prepared from the composition has a conductivity of at least 0.005 S/cm, preferably at least 0.05 S/cm and most preferably at least 1 S/cm.

|16| The liquid composition according to anyone of embodiments |1| to |15|, wherein the liquid composition has a Z-value of more than 10,000 nm × S/cm, preferably more than 15,000 nm × S/cm and most preferably more than 40,000 nm × S/cm, wherein Z is defined as follows:

$$Z = P \times C,$$

wherein P correponds to the weight average particle diameter ($d_{50}$) of particles i) (in [nm]) and C corresponds to the conductivity of a conductive layer prepared by coating the liquid composition onto the surface of a substrate and subsequently removing the at least one solvent i) by evaporation (in [S/cm]).

|17| The liquid composition according to anyone of embodiments |1| to |16|, wherein the viscosity of the liquid composition is between 10 and 2,000 mPa·s, preferably between 20 and 1,000 mPa·s and most preferably between 80 and 500 mPa·s (measured with a rheometer at 20 °C and a shear rate of 100 $s^{-1}$).

|18| A process for the preparation of a liquid composition, the process comprising the process steps of

I) providing a liquid reaction mixture comprising thiophene monomers, at least one polyanion, at least one oxidizing agent and the at least one solvent ii), wherein the reaction mixture comprises at least 30 wt.-%, more preferably at least 35 wt.-% and most preferably at least 40 wt.-% of the thiophene monomer, in each case based on the total weight of the thiophene monomer and the polyanion;
II) oxidatively polymerizing the thiophene monomers in the presence of the polyanions, whereby a liquid composition is formed comprising particles i) that comprise a complex of a polythiophene and the polyanion;
III) optionally purification of the liquid composition obtained in process step II);
IV) optionally adjusting the solids content of the liquid composition obtained in process step II) or III);
V) optionally adding at least one further polymer iii) being different from the polythiophene and the polyanion and/or adding at least one additive iv) to the liquid composition obtained in process step II), III) or IV), preferably in process step III) or IV).

|19| The process according to embodiment |18|, wherein the thiophene monomer is 3,4-ethylenedioxythiophene.

|20| The process according to embodiment |18| or |19|, wherein the polyanion is an anion of polystyrene sulfonic acid.

|21| The process according to anyone of embodiments |18| to |20|, wherein the complex that is formed in process step II) is a complex of poly(3,4-ethylenedioxythiophene) and an anion of polystyrene sulfonic acid (PEDOT/PSS).

|22| The process according to anyone of embodiments |18| to |21|, wherein the polymerization of the thiophene monomers in process step II) is performed under a pressure below atmospheric pressure (1,013.25 hPa at sea level), preferably under a pressure of below 800 hPa, more preferably under a pressure of below 200 hPa and most preferably under a pressure of below 50 hPa.

|23| The process according to anyone of embodiments |18| to |22|, wherein the polymerization of the thiophene monomers in process step II) is performed in the presence of an acid.

|24| The process according to embodiment |23|, wherein the acid is an inorganic acid.

|25| The process according to embodiment |24|, wherein the inorganic acid is selected from the group consisting formic acid, acetic acid, lactic acid, propionic acid, citric acid, malic acid, fumaric acid, sulfuric acid, sulfonic acid, nitric acid, phosphonic acid, phosphoric acid or mixtures thereof.

|26| The process according to embodiment |25|, wherein the inorganic acid is sulfuric acid.

|27| The process according to anyone of embodiment |23| to |26|, wherein the acid is present in such an amount that the pH of the reaction mixture is below 7.0, preferably below 6.0, more preferably below 5.0, more preferably below 4.0, more preferably below 3.0, more preferably below 2.0 and most preferably below 1.0, wherein the pH is determined at a temperature of 20°C.

|28| The process according to anyone of embodiments |18| to |27|, wherein the polymerization of the thiophene monomers in process step II) is performed while subjecting the reaction mixture to shear forces, wherein the shear forces are adjusted to ensure that the particles i) comprising a complex of a polythiophene and the polyanion that are obtained in process step II) have a weight average particle diameter ($d_{50}$) of particles i) in the range from 10 nm to 2,000 nm, more preferably in the range from 30 nm to 1,000 nm, more preferably in the range from 250 nm to 900 nm and most preferably in the range from 260 nm to 500 nm.

|29| The process according to anyone of embodiments |18| to |28|, wherein in process step V) at least one further polymer iii) being different from the polythiophene and the polyanion is added to the liquid composition in such an amount that the mass content of the at least one further polymer iii) in the liquid composition is at least 5 times, preferably at least 10 times, more preferably at least 15 times and most preferably at least 20 times larger than the total mass content of the polythiophene and the polyanion in the liquid composition.

|30| The process according to embodiment |29|, wherein the at least one further polymer iii) is binder selected from the group consisting of polyvinyl alcohols, polyvinylpyrrolidones, polyvinyl chlorides, polyvinyl acetates, polyvinyl butyrates, polyacrylic esters, polyacrylamides, polymethacrylic esters, polymethacrylamides, polyacrylonitriles, styrene/acrylic ester, vinyl acetate/acrylic ester, ethylene/vinyl acetate copolymers, polybutadienes, polyisoprenes, polystyrenes, polyethers, polyesters, sulfonated polyesters, polycarbonates, polyurethanes, polyamides, polyimides, polysulfones, melamine-formaldehyde resins, epoxy resins, silicone resins, silane resins, celluloses or a mixture of at least two of these binders.

|31| The process according to embodiment |30|, wherein the binder is a water-soluble binder.

|32| The process according to embodiment |31|, wherein the water-soluble binder is sulfonated polyester.

|33| A liquid composition, obtainable by the process according to anyone of embodiments |18| to |32|.

|34| The liquid composition according to embodiment |33|, wherein the weight average particle diameter ($d_{50}$) of particles i) obtained in process step II) is in the range from 10 nm to 2,000 nm, more preferably in the range from 30 nm to 1,000 nm, more preferably in the range from 250 nm to 900 nm and most preferably in the range from 260 nm to 500 nm.

|35| The liquid composition according to embodiment |33| or |34|, wherein the liquid composition comprises less than 1,000 ppm, more preferably less than 100 ppm, more preferably less than 10 ppm and even more preferably less than 1 ppm of solvents having a boiling point (determined at 1,013.25 mbar) of more than 100°C, in each case based on the total mass of the liquid composition.

|36| The liquid composition according to embodiment |35|, wherein the liquid composition does not comprise solvents having a boiling point (determined at 1,013.25 mbar) of more than 100°C.

|37| The liquid composition according to anyone of embodiments |33| to |36|, wherein a conductive layer prepared from the composition has a conductivity of at least 50 S/cm, preferably at least 70 S/cm, more preferably at least 85 S/cm and most preferably at least preferably at least 110 S/cm.

|38| The liquid composition according to anyone of embodiments |33| to |36|, wherein the liquid composition is obtainable by the process according to embodiments |29| to |32| and wherein a conductive layer prepared from the composition has a conductivity of at least 0.005 S/cm, preferably at least 0.05 S/cm and most preferably at least 1 S/cm.

|39| A process for the preparation of a layered body, the process comprising the process steps:

A) the provision of a substrate;
B) the application of the liquid composition according to anyone of embodiments |1| to |17| or |33| to |38| onto

this substrate;
C) the at least partial removal of the at least one solvent ii) from the liquid composition to obtain a layered body comprising an electrically conductive layer coated onto the substrate.

|40| A layered body, obtainable by the process according to embodiment |39|.

|41| The layered body according to embodiment |40|, wherein the electrically conductive layer layer has a conductivity of at least 50 S/cm, preferably at least 70 S/cm, more preferably at least 85 S/cm and most preferably at least preferably at least 110 S/cm.

|42| The layered body according to embodiment |40|, wherein the liquid composition according to anyone of embodiments |10| to |14| or |29| to |32| has been applied onto the substrate and wherein the electrically conductive layer layer has a conductivity of at least 0.005 S/cm, preferably at least 0.05 S/cm and most preferably at least 1 S/cm.

|43| Use of the liquid composition according to anyone of embodiments |10| to |14| or |29| to |32| for the production of a layered body comprising a substrate and an electrically conductive layer coated onto the substrate.

|44| Use according to embodiment |43| for the production of an antistatic coating.

A contribution towards achieving the abovementioned objects is made by a liquid composition comprising

i) particles comprising a complex of a polythiophene and a polyanion, and

ii) at least one solvent;

wherein

a) the liquid composition comprises at least 30 wt.-%, more preferably at least 35 wt.-% and most preferably at least 40 wt.-% of the polythiophene, in each case based on the total weight of the polythiophene and the polyanion;

b) the weight average particle diameter ($d_{50}$) of particles i) is in the range from 10 nm to 2,000 nm, more preferably in the range from 30 nm to 1,000 nm, more preferably in the range from 250 nm to 900 nm and most preferably in the range from 260 nm to 500 nm.

The liquid composition according to the present invention comprises, as component i), particles comprising a polythiophene. In this context, polythiophenes having the general formula

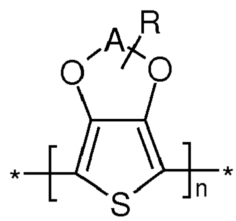

are particularly preferred, in which

A represents an optionally substituted $C_1$-$C_5$-alkylene radical,

R represents a linear or branched, optionally substituted $C_1$-$C_{18}$-alkyl radical, an optionally substituted $C_5$-$C_{12}$-cycloalkyl radical, an optionally substituted $C_6$-$C_{14}$-aryl radical, an optionally substituted $C_7$-$C_{18}$-aralkyl radical, an optionally substituted $C_1$-$C_4$-hydroxyalkyl radical or a hydroxyl radical, wherein 0 to 8 radicals R can be bonded to A and, in the case of more than one radical, can be identical or different.

The polythiophenes preferably in each case carry H on the end groups.

In the context of the invention, $C_1$-$C_5$-alkylene radicals A are preferably methylene, ethylene, n-propylene, n-butylene or n-pentylene. $C_1$-$C_{18}$-alkyl R preferably represent linear or branched $C_1$-$C_{18}$-alkyl radicals, such as methyl, ethyl, n- or iso-propyl, n-, iso-, sec- or tert-butyl, n-pentyl, 1-methylbutyl, 2-methylbutyl, 3-methylbutyl, 1-ethylpropyl, 1,1-dimethylpropyl, 1,2-dimethylpropyl, 2,2-dimethylpropyl, n-hexyl, n-heptyl, n-octyl, 2-ethylhexyl, n-nonyl, n-decyl, n-undecyl, n-dodecyl, n-tridecyl, n-tetradecyl, n-hexadecyl or n-octadecyl, $C_5$-$C_{12}$-cycloalkyl radicals R represent, for example, cyclopentyl, cyclohexyl, cycloheptyl, cyclooctyl, cyclononyl or cyclodecyl, $C_5$-$C_{14}$-aryl radicals R represent, for example, phenyl or naphthyl, and $C_7$-$C_{18}$-aralkyl radicals R represent, for example, benzyl, o-, m-, p-tolyl, 2,3-, 2,4-, 2,5-, 2,6-, 3,4-, 3,5-xylyl or mesityl. The preceding list serves to illustrate the invention by way of example and is not to be considered conclusive.

In the context of the invention, numerous organic groups are possible as optionally further substituents of the radicals A and/or of the radicals R, for example alkyl, cycloalkyl, aryl, aralkyl, alkoxy, halogen, ether, thioether, disulphide, sulphoxide, sulphone, sulphonate, amino, aldehyde, keto, carboxylic acid ester, carboxylic acid, carbonate, carboxylate, cyano, alkylsilane and alkoxysilane groups and carboxamide groups.

Polythiophenes in which A represents an optionally substituted $C_2$-$C_3$-alkylene radical are particularly preferred. Poly(3,4-ethylenedioxythiophene) is very particularly preferred as the polythiophene.

The polythiophenes can be neutral or cationic. In preferred embodiments they are cationic, "cationic" relating only to the charges on the polythiophene main chain. The polythiophenes can carry positive and negative charges in the structural unit, depending on the substituent on the radicals R, the positive charges being on the polythiophene main chain and the negative charges optionally being on the radicals R substituted by sulphonate or carboxylate groups. In this context, the positive charges of the polythiophene main chain can be partly or completely satisfied by the anionic groups optionally present on the radicals R. Overall, in these cases the polythiophenes can be cationic, neutral or even anionic. Nevertheless, in the context of the invention they are all regarded as cationic polythiophenes, since the positive charges on the polythiophene main chain are the deciding factor. The positive charges are not shown in the formulae, since their precise number and position cannot be determined absolutely. However, the number of positive charges is at least 1 and at most n, where n is the total number of all recurring units (identical or different) within the polythiophene.

For compensation of the positive charge of the polythiophene, the particles comprising the conductive polymer furthermore comprise a polyanion which is preferably based on polymers functionalized with acid groups. Anions of polymeric carboxylic acids, such as polyacrylic acids, polymethacrylic acid or polymaleic acids, or of polymeric sulphonic acids, such as polystyrenesulphonic acids and polyvinylsulphonic acids, are possible in particular as the polyanion. These polycarboxylic and -sulphonic acids can also be copolymers of vinylcarboxylic and vinylsulphonic acids with other polymerizable monomers, such as acrylic acid esters and styrene. Polyanions which are furthermore possible are perfluorinated, colloid-forming polyanions, which are commercially obtainable, for example, under the name Nafion®. The molecular weight of the polymers which are functionalized with acid groups and supply the polyanions is preferably 1,000 to 2,000,000, particularly preferably 2,000 to 500,000. The polymers functionalized with acid groups or their alkali metal salts are commercially obtainable, e.g. polystyrenesulphonic acids and polyacrylic acids, or can be prepared by known processes (see e.g. Houben Weyl, Methoden der organischen Chemie, vol. E 20 Makromolekulare Stoffe, part 2, (1987), p. 1141 et seq.). A particularly preferred polyanion is an anion of polystyrene sulfonic acid.

The particles i) comprise a complex of a polythiophene and a polyanion, particularly preferably a PEDOT/PSS-complex. Such complexes are obtainable by polymerizing the thiophene monomers, preferably 3,4-ethylenedioxythiophene, oxidatively in an aqueous solution in the presence of the polyanions, preferably by oxidatively polymerizing 3,4-ethylenedioxythiophene in the presence of an anion of polystyrenesulphonic acid.

The liquid composition according to the present invention further comprises, as component ii), at least one solvent. As a *"solvent"* within the meaning of the present invention preferably any component of the liquid composition is understood that, when being present as an isolated compound, is a liquid at room temperature. Preferably, the particles i) are dispersed in the solvent ii). The liquid composition is thus preferably a dispersion.

Preferred solvents ii) are water, water-miscible solvents, in particular those selected from the group consisting aliphatic alcohols, such as methanol, ethanol, n-propanol and isopropanol, diacetone alcohols, aliphatic ketones, such as acetone and methyl ethyl ketone or a mixture of at least two of these solvents. The most preferred solvent, however, is water. In this context it is particularly preferred, that at least 95 wt.-%, more preferably at least 99 wt.-%, even more preferably at least 99.5 wt.-% and even more preferably at least 99.9 wt.-% of the total amount of solvents ii) in the liquid composition is based on water or a mixture of water and an alcohol selected from the group consisting of methanol, ethanol, n-propanol and isopropanol.

According to a particularly preferred embodiment of the liquid composition according to the present invention the composition is substantially free of solvents having a boiling point (determined at 1,013.25 mbar) of more than 100°C. With *"substantially free of solvents having a boiling point of more than 100°C"* within the meaning of the present invention it is preferably understood that the liquid composition comprises less than 1,000 ppm, more preferably less than 100 ppm, more preferably less than 10 ppm and even more preferably less than 1 ppm of such high-boiling solvents, in each case based on the total mass of the liquid composition, wherein it is most preferred that the liquid composition according to the present invention does not comprise such high-boiling solvents at all.

According to a preferred embodiment of the liquid composition according to the present invention the liquid composition comprises the complex of a polythiophene and a polyanion, preferably PEDOT/PSS, in an amount of 0.001

to 2.5 wt.-%, more preferably 0.005 to 1.0 wt.-% and most preferably 0.01 to 0.5 wt.-%, in each case based on the total weight of the composition. The amount of complex in the liquid composition of course depends on the presence of further components in the composition, particularly on the amount of further polymer polymers such as binders.

The liquid composition according to the present invention is characterized in that it comprises at least 30 wt.-%, more preferably at least 35 wt.-% and most preferably at least 40 wt.-% of the 1polythiophene, preferably poly(3,4-ethylenedioxythiophene), in each case based on the total weight of the polythiophene and the polyanion, preferably based on the total weight of PEDOT and PSS. The maximum amount of polythiophene, preferably poly(3,4-ethylenedioxythiophene), is preferably below 70 wt.-%, more preferably below 60 wt.-% and even more preferably below 50 wt.-%, in each case based on the total weight of the polythiophene and the polyanion, preferably based on the total weight of PEDOT and PSS.

The liquid composition according to the present invention is further characterized in that the weight average particle diameter ($d_{50}$) of particles i) is in the range from 10 nm to 2,000 nm, more preferably in the range from 30 nm to 1,000 nm, more preferably in the range from 250 nm to 900 nm and most preferably in the range from 260 nm to 500 nm. The $d_{50}$-value of the diameter distribution states that 50 % of the total weight of all the particles i) can be assigned to those particles which have a diameter of less than or equal to the $d_{50}$ value (the $d_{50}$-value thus represents the weight average particle diameter).

As in case of PEDOT/PSS-particles dispersed in an aqueous solution the particles are usually present in the form of swollen gel particles, the above mentioned particle sizes refer to the particles size of the swollen gel particles and are determined by means of an ultracentrifuge measurement as described below.

The liquid composition according to the present invention may further comprise

iii) at least one further polymer being different from the polythiophene and the polyanion, wherein this at least one further polymer iii) preferably serves as a binder. Suitable binders are selected from the group consisting of polyvinyl alcohols, polyvinylpyrrolidones, polyvinyl chlorides, polyvinyl acetates, polyvinyl butyrates, polyacrylic esters, polyacrylamides, polymethacrylic esters, polymethacrylamides, polyacrylonitriles, styrene/acrylic ester, vinyl acetate/acrylic ester, ethylene/vinyl acetate copolymers, polybutadienes, polyisoprenes, polystyrenes, polyethers, polyesters, sulfonated polyesters, polycarbonates, polyurethanes, polyamides, polyimides, polysulfones, melamine-formaldehyde resins, epoxy resins, silicone resins, silane resins, celluloses or a mixture of at least two of these binders. Further useful polymeric binders are preferably also those which are obtained by adding crosslinkers, for example melamine compounds, capped isocyanates or functional silanes, for example 3-glycidoxypropyltrialkoxysilane, tetraethoxysilane and tetraethoxysilane hydrolyzate, to crosslinkable polymers, for example polyurethanes, polyacrylates or polyolefins, and subsequently crosslinking. Water-soluble binders, such as sulfonated polyesters, are particularly preferred.

According to a preferred embodiment of the liquid composition according to the present invention the mass content of the at least one further polymer iii), preferably of the at least one polymeric binder, in the liquid composition is at least 5 times, preferably at least 10 times, more preferably at least 15 times and most preferably at least 20 times larger than the total mass content of the polythiophene and the polyanion in the liquid composition (i. e. if the mass content of the polythiophene in the liquid composition is A wt.-% and the mass content of the polyanion in the liquid composition is B wt-%, the mass content of the at least one further polymer iii) is at least $5 \times$ (A wt.-% + B wt.-%). If two or more further polymers iii) are present, the total mass of these further polymers is at least 5 times, preferably at least 10 times, more preferably at least 15 times and most preferably at least 20 times larger than the total mass content of the polythiophene and the polyanion in the liquid composition.

The liquid composition according to the present invention may further comprise

iv) at least one additive being different from the polythiophene, the polyanion, the solvent ii) and the further polymer iii).

Suitable additives iv) are

- surface-active substances, e.g. anionic surfactants, such as e.g. alkylbenzenesulphonic acids and salts, paraffin sulphonates, alcohol sulphonates, ether sulphonates, sulphosuccinates, phosphate esters, alkyl ether carboxylic acids or carboxylates, cationic surfactants, such as e.g. quaternary alkylammonium salts, nonionic surfactants, such as e.g. linear alcohol ethoxylates, oxo alcohol ethoxylates, alkylphenol ethoxylates or alkyl polyglucosides, in particular surfactants that are commercially available under the trademarks Dynol® and Zonyl®,

- adhesion promoters, such as e.g. organofunctional silanes or hydrolysates thereof, e.g. 3-glycidoxypropyltrialkoxysilane, 3-amino-propyl-triethoxysilane, 3-mercaptopropyltrimethoxysilane, 3-methacryloxypropyltrimethoxy-silane, vinyltrimethoxysilane or octyltriethoxysilane,

- crosslinking agents, such as melamine compounds, masked isocyanates, functional silanes, e.g. tetraethoxysilane, alkoxysilane hydrolysates, e.g. based on tetraethoxysilane, epoxysilanes, such as 3-glycidoxypropyltrialkoxysilane,

The viscosity of the liquid composition according to the present invention is preferably between 10 and 2,000 mPa·s (measured with a rheometer at 20 °C and a shear rate of 100 $s^{-1}$). More preferably, the viscosity is between 20 and 1,000 mPa·s, particularly preferably between 80 and 500 mPa·s. The adjustment of the viscosity can, for example, be accomplished by adding appropriate rheology modifiers as a further additive.

It is particularly preferred that the liquid composition according to the present invention has a Z-value of more than 10,000 nm × S/cm, preferably more than 15,000 nm × S/cm and most preferably more than 40,000 nm × S/cm wherein Z is defined as follows:

$$Z = P \times C,$$

wherein P correponds to the weight average particle diameter ($d_{50}$) of particles i) (in [nm]) and C corresponds to the conductivity of a conductive layer prepared by coating the liquid composition onto the surface of a substrate and subsequently removing the at least one solvent i) by evaporation (in [S/cm]).

It is furthermore preferred that a conductive layer prepared by means of the liquid composition according to the present invention has a conductivity of at least 50 S/cm, preferably at least 70 S/cm, more preferably at least 85 S/cm and most preferably at least 110 S/cm. In case of a liquid composition according to the present invention that comprises the further polymer iii), in particular in case of a liquid composition according to the present invention that comprises the further polymer iii) in an amount that is at least 5 times, preferably at least 10 times, more preferably at least 15 times and most preferably at least 20 times larger than the amount of the polythiophene and the polyanion in the liquid composition, a conductive layer prepared by means of such a liquid composition preferably has a conductivity of at least 0.005 S/cm, more preferably at least 0.05 S/cm and most preferably at least 1 S/cm.

A contribution towards achieving the abovementioned objects is made by a process for preparing a liquid, the process comprising the process steps of

I) providing a liquid reaction mixture comprising thiophene monomers, at least one polyanion, at least one oxidizing agent and the at least one solvent ii), wherein the reaction mixture comprises at least 30 wt.-%, preferably at least 35 wt.-% and more preferably at least 40 wt.-% of the thiophene monomer, in each case based on the total weight of the thiophene monomer and the polyanion;

II) oxidatively polymerizing the thiophene monomers in the presence of the polyanions, whereby a liquid composition is formed comprising particles i) that comprise a complex of a polythiophene and the polyanion, wherein these particles i) are preferably dispersed in the solvent ii);

III) optionally purification of the liquid composition obtained in process step II);

IV) optionally adjusting the solids content of the liquid composition obtained in process step II) or III);

V) optionally adding at least one further polymer iii) being different from the polythiophene and the polyanion and/or adding at least one additive iv) to the liquid composition obtained in process step II), III) or IV), preferably in process step III) or IV).

In process step I) a reaction mixture comprising thiophene monomers, at least one polyanion, at least one oxidizing agent and the at least one solvent ii) is provided.

Suitable oxidizing agents are salts of heavy metals, preferably iron salts, more preferably $FeCl_3$ and iron(III) salts of aromatic and aliphatic sulfonic acids, $H_2O_2$, $K_2Cr_2O_7$, salts of a salt of a peroxodisulfate, such as $K_2S_2O_8$, $Na_2S_2O_8$, $KMnO_4$, alkali metal perborates, and alkali metal or ammonium persulfates, or mixtures of these oxidants. Particularly preferred are salts of a heavy metal, salts of a peroxodisulfate or a mixture thereof. Further suitable oxidants are described, for example, in Handbook of Conducting Polymers (Ed. Skotheim, T. A.), Marcel Dekker: New York, 1986, Vol. 1, pages 46-57. Particularly preferred oxidizing agents are salts of a peroxodisulfate, in particular $K_2S_2O_8$, $Na_2S_2O_8$, iron salts, in particular iron(III) chloride, or mixtures of salts of a peroxodisulfate and at least one further compound that

catalyzes the cleavage of the peroxodisulfate, like mixtures of salts of a peroxodisulfate and iron salts.

The concentration of the thiophene monomer in the reaction mixture that is provided in process step I) is preferably in a range from 0.1 to 10 wt.-%, preferably in a range from 0.3 to 3 wt.-%.

In process step II) the thiophene monomers are oxidatively polymerized in the presence of the polyanions, whereby a liquid composition is formed comprising particles i) that comprise a complex of a polythiophene and the polyanion, wherein the particles i) are preferably dispersed in the solvent ii).

The polymerization reaction in process step II) is preferably performed at a temperature in the range from 0°C to 100°C, preferably from 2°C to 30°C and for a duration of preferably 1 to 48 hours, more preferably for 5 to 30 hours. It is also preferred that the polymerization of the thiophene monomers, in particular 3,4-ethylenedioxythiophene, is performed under a pressure below atmospheric pressure (i. e. 1,013.25 hPa at sea level), preferably under a pressure of below 800 hPa, more preferably under a pressure of below 200 hPa and most preferably under a pressure of below 50 hPa.

It is furthermore preferred that the polymerization of the thiophene monomers in process step II) is performed in the presence of an acid, more preferably in the presence of an inorganic acid. The inorganic acid is preferably selected from the group consisting formic acid, acetic acid, lactic acid, propionic acid, citric acid, malic acid, fumaric acid, sulfuric acid, sulfonic acid, nitric acid, phosphonic acid, phosphoric acid or mixtures thereof, wherein the use of sulfuric acid is particularly preferred.

In this context it is also preferred that the acid is present in such an amount that the pH of the reaction mixture is below 7.0, preferably below 6.0, more preferably below 5.0, more preferably below 4.0, more preferably below 3.0, more preferably below 2.0 and most preferably below 1.0, wherein the pH is determined at a temperature of 20°C.

It is also preferred that the the polymerization of the thiophene monomers in process step II) is performed while subjecting the reaction mixture to shear forces, wherein the shear forces are adjusted to ensure that the particles i) comprising a complex of a polythiophene and the polyanion that are obtained in process step II) have a weight average particle diameter ($d_{50}$) of particles i) in the range from 10 nm to 2,000 nm, more preferably in the range from 30 nm to 1,000 nm, more preferably in the range from 250 nm to 900 nm and most preferably in the range from 260 nm to 500 nm. Shear forces can be applied by using appropriate mixing devices.

In process step III) the liquid composition obtained in process step II) is optionally purified, for example by means of filtration, in particular by means of ultrafiltration, and/or by a treatment with ion exchanger, in particular by a treatment with an anion exchanger and a cation exchanger.

In process step IV) the solids content of the liquid composition obtained in process step II) or III) is optionally adjusted, preferably by adding a further amount of the at least one solvent ii), preferably by adding water, or by removing a part of the at least one solvent ii), preferably by means of evaporation.

In process step V) the at least one further polymer iii) being different from the polythiophene and the polyanion and/or the least one additive iv) are optionally added to the liquid composition obtained in process step II), III) or IV), preferably in process step III) or IV).

A contribution towards achieving the abovementioned objects is also made by a liquid composition obtainable by the above described process, wherein the properties of such a liquid composition are preferably identical to the properties of the liquid composition according to the present invention. In this context it is particularly preferred that the composition that is obtainable by the above described process, preferably that is obtained by the above described process, is substantially free of solvents having a boiling point (determined at 1,013.25 mbar) of more than 100°C. Preferably, the composition comprises less than 1,000 ppm, more preferably less than 100 ppm, more preferably less than 10 ppm and even more preferably less than 1 ppm of such high-boiling solvents, in each case based on the total mass of the liquid composition, wherein it is most preferred that the liquid composition that is obtainable by the above described process, preferably that is obtained by the above described process, does not comprise such high-boiling solvents at all.

A contribution towards achieving the abovementioned objects is also made by a process for the production of a layered body, comprising the process steps:

A) the provision of a substrate;

B) the application of the liquid composition according to the present invention or of the liquid composition obtainable by the process according to the present invention onto this substrate;

C) the at least partial removal of the at least one solvent ii) from the liquid composition to obtain a layered body comprising an electrically conductive layer coated onto the substrate.

In process step A) a substrate is first provided, wherein the nature of the substrate depends on the intended purpose for which the composition according to the present invention is employed. Suitable substrates include films,

particularly preferably polymer films, very particularly preferably polymer films of thermoplastic polymers, or glass plates.

In process step B) the liquid composition according to the present invention or the liquid composition obtainable by the process according to the present invention is then applied onto the substrate, it being possible for this application to be carried out by known processes, e.g. by spin coating, impregnation, pouring, dripping on, spraying, misting, knife coating, brushing or printing, for example by ink-jet, screen, gravure, offset or tampon printing, in a wet film thickness of from, for example, 0.5 μm to 250 μm, preferably in a wet film thickness of from 2 μm to 50 μm.

In process step C), at least some of the at least one solvent ii) is then removed from the composition to obtain a layered body comprising an electrically conductive layer coated onto the substrate, this removal preferably being carried out by a drying at a temperature in a range of from 20 °C to 200 °C of the substrate coated with the composition.

A contribution towards achieving the above mentioned objects is also made by a layered body which is obtainable by the process described above. In this context it is particularly preferred that the electrically conductive layer layer has a conductivity of at least 50 S/cm, preferably at least 70 S/cm, more preferably at least 85 S/cm and most preferably at least preferably at least 110 S/cm. If for the formation of the electrically conductive layer a liquid composition has been used that comprises, in addition to the polythiophene and the polyanion, at least one further polymer, such as a binder in a mass content that is at least 5 times, preferably at least 10 times, more preferably at least 15 times and most preferably at least 20 times larger than the total mass content of the polythiophene and the polyanion in the liquid composition, the electrically conductive layer layer preferably has a conductivity of at least 0.005 S/cm, more preferably at least 0.05 S/cm and most preferably at least 1 S/cm.

A contribution towards achieving the abovementioned objects is also made by the use of the liquid composition according to the present invention or of the liquid composition obtainable by the process according to the present invention for the production of a layered body comprising a substrate and an electrically conductive layer coated onto the substrate.

The layered bodies that can be prepared with the liquid composition according to the present invention are outstandingly suitable for use as electronic components, in particular as conductive or antistatic means, as transparent heating or as electrodes. They can advantageously be transparent.

These layered bodies can be employed as electronic components, for example also on films, packaging of electronic components, for finishing films of plastics and for coating screens. They can furthermore be used as transparent electrodes e.g. in displays, for example as a substitute for indium-tin oxide electrodes, or as electrical conductors in polymeric electronics. Further possible uses are sensors, batteries, solar cells, electrochromic windows (smart windows) and displays and corrosion protection.

In view of the high conductivity of the coatings obtained with the liquid composition according to the present invention or with the liquid composition obtainable by the process according to the present invention these liquid compositions are particularly useful for the production of an antistatic coating.

The invention is now explained in more detail with the aid of non-limiting examples.

## TEST METHODS

### Determination of the particle diameter

The particle size distribution was determined via ultracentrifugation. The details of the method are described under Schlotan et al. (Kolloid-Z und Z Polymer; 250 (1972) page 782, "Bestimmung der Teilchengrößenverteilung von Latices mit der Ultrazentrifuge") and Müller (Colloid & Polymer Science; 267 (1989) page 1113).

### Determination of the solids content

The solid content was determined by gravimetry using a precision scale (Mettler AE 240). First the empty weighing bottle including lid is weight in (Weight A). Then 3 g of dispersion to be analysed is filled quickly into the bottle, closed by the lid and weighed again to determine the exact total weight B. The bottle is then placed in a fume hood without a lit for 3 hours to allow the evaporation of volatile solvents at room temperature. In a second step the bottle is placed in a drying oven with ventilation (Memmert UNB200) at 100 °C for 16 - 17 hours. When the sample bottle is removed from the oven, immediate coverage by the glass lid is important due to the hygroscopic nature of the dry dispersion material. After 10 - 15 min of cooling down period the bottle is weighed again including lid to determine weight C. There is always a repeat determination of 2 samples.

### Determination of the amount of polythiophene relative to the amount of polyanion

In order to calculate the relative amount of the polythiophene (such as PEDOT) and the relative amount of the polyanion (such as PSS) two measurements are made. Firstly, the solids content of the composition is measured as described above. The solids content is a measure for the total concentration of conductive polymer and polyanion

[PT+PA], preferably PEDOT/PSS, in the composition. If the composition comprises further components in addition to the conductive polymer and the polyanion, it may be necessary to apply suitable separation techniques or analytic methods that allow the quantification of such further components and thus the quantification of total amount of conductive polymer and polyanion in the composition.

The concentration of the polythiophene in the sample can be measured by UV/VIS spectroscopy. The composition is filled into a 0.2 mm cuvette and in case of PEDOT as the polythiophene the absorbance is measured at 1,250 nm using a spectrometer (Lambda 900). Subsequently, the absorbance of pure water is measured in a 0.2 mm cuvette.

The polythiophene-concentration [PT] can be calculated in the following way:

$$[PT] = [\text{absorbance(composition)}_{1,250\text{nm}} - \text{absorbance (water)}_{1,250\text{ nm}}]/530$$

Based on the concentration of polythiophene in the composition [PT] and the total concentration of polythiophene and polyanion (preferably PEDOT/PSS) in the composition [PT+PA] the amount of polythiophene relative to the total amount of polythiophene and polyanion can be determined:

$$\text{amount of polythiophene} = ([PT]/[PT+PA]) \times 100 \text{ wt.-\%}.$$

If, for example, the concentration of polythiophene in the composition is 5 g/L and the concentration of the polyanion is 15 g/l, the amount of polythiophene relative to the total amount of polythiophene and polyanion would be 25 wt.-% (5 g/l / (5 g/L + 15 g/L) $\times$ 100 wt.-%).

In case of other polythiophenes it is necessary to prepare several dispersions with different ratios and determine in each case the solids content of the polythiophene/polyanion complex and the concentration of the polythiophene. Since polythiophenes typically show absorption in the visible and near infrared range, whereas typical polyanions do not absorb in this range, it is possible to prepare a calibration curve for each specific combination of polythiophene and polyanion. Based on this calibration the polythiophene concentration can then be determined.

Determination of the conductivity

The electrical conductivity means the inverse of the specific resistance. The specific resistance is calculated from the product of surface resistance and layer thickness of the conductive polymer layer. The surface resistance is determined for conductive polymers in accordance with DIN EN ISO 3915. In concrete terms, the polymer to be investigated is applied as a homogeneous film by means of a spin coater to a glass substrate 50 mm $\times$ 50 mm in size thoroughly cleaned by the abovementioned substrate cleaning process. In this procedure, the coating composition is applied to the substrate by means of a pipette to completely cover the area and spun off directly by spin coating. The spin conditions for coating compositions were 20 s at approx. 1,000 rpm in air. Thereafter, a drying process on a hotplate was carried out (15 min at 130 °C in air). Silver electrodes of 2.0 cm length at a distance of 2.0 cm are vapour-deposited on to the polymer layer via a shadow mask. The square region of the layer between the electrodes is then separated electrically from the remainder of the layer by scratching two lines with a scalpel. The surface resistance is measured between the Ag electrodes with the aid of an ohmmeter (Keithley 614). The thickness of the polymer layer is determined with the aid of a Stylus Profilometer (Dektac 150, Veeco) at the places scratched away.

EXAMPLES

Example 1: PEDOT/PSS synthesis (according to the invention)

The reaction was performed in a 3 L temperature controlled stainless steel reactor equipped with a stirrer, a vent at the top and a vent at the bottom. A tube was connected to the vent at the top. 2,450 g water, 11.4 g sulfuric acid (95%), 64.6 g polystyrene sulfonic acid solution (25% solids; 16.15 g polystyrene sulfonic acid solids) und 5.7 g of a 10% iron(III) sulfat solution were subjected to the reaction vessel. The stirrer war turned at 50 rpm. The temperature was set to 45 °C. The inside pressure was adjusted to 100 hPa. The temperature was reduced to 13°C and the inside pressure was reduced to 33 hPa and kept over 16 h. The mixture was degassed with nitrogen. The pressure was brought to 1,100 hPas and 10.77 g ethylenedioxythiophene (Clevios M V2, Heraeus) was added through the tube. 21.2 g sodium peroxodisulfate were dissolved in 100 g degased water and also added through the tube. The resulting fraction of EDOT after in the EDOT/PSS mixture was therefore 40 wt.-%. Subsequently the inside pressure was reduced to 25 hPa. The

reaction proceeded for 22 h at 25 hPas and 13°C. The reaction mixture was transferred to a beaker and 100 g Lewatit S108 H (Lanxess) and 340 g anion exchange resin Lewatit MP 62 (Lanxess) were added. The mixture was stirred for 6 h and the ion-exchange resin removed through a 60 μm filter cloth. The dispersion shows the following properties:

The solids content was 1.2%, the viscosity was 246 mPa·s and the $d_{50}$-value was 381 nm. The conductivity of a coated film of the neat dispersion in the absence of any additives was 116 S/cm.

The properties of the thus obtained dispersion are compared with those of commercially available dispersions (Clevios P, Clevios PT 2, Clevios P HC V4 and Clevios PH 500). The results are shown in table 1.

Table 1

| Example | Example | PEDOT-content [wt.-%] | $d_{50}$ [nm] | solids content [wt.-%] | Conductivity (without additives) [S/cm] | Z-value [nmxS/cm] |
|---|---|---|---|---|---|---|
| Clevios P | reference | 28.6 | 40 | 1.2 | 5 | 200 |
| Clevios PT2 | reference | 28.6 | 40 | 1.2 | 10 | 400 |
| Clevios P HC V4 | reference | 28.6 | 250 | 1.2 | 40 | 10,000 |
| Clevios PH 500 | reference | 28.6 | 25 | 1.2 | 5 | 125 |
| Example 1 | inventive | 40.0 | 381 | 1.2 | 116 | 44,196 |

Example 2: Addition of a polymeric binder 20 fold (according to the invention)

In a 100 ml beaker to 10 g of PEDOT/PSS dispersion (as obtained in Example 1) 20 g of water were added, followed by 10 g of Eastek 1200-2-30 (sulfonated polyester dispersion in water; 30 wt.-%). The resulting mixture contained 0.12 g of PEDOT/PSS solids and 3.0 g of polyester solids. The ratio of PEDOT/PSS to binder is 1 : 25. The mixture was stirred for 10 min. Subsequently a film was deposited on a PET substrate using a 12 μm wire blade. The film was dried for 10 min at 120°C. The sheet resistance of the film was determined to be $1.9 \times 10^5$ Ω/sq (formulation 5). The conductivity was determined to be $5.6 \times 10^{-2}$ S/cm. The properties of formulation 5 were compared with those of commercially available dispersions (Clevios P, Clevios PT 2, Clevios P HC V4 and Clevios PH 500) to which the same amount of polymeric binder has been added (formulations 1 to 4). The results are shown in table 2.

Table 2

| Formulation | PEDOT/PSS-type | PEDOT-content [wt.-%] | Conductivity [S/cm] |
|---|---|---|---|
| 1 | Clevios P | 28.6 | $4.4 \times 10^{-5}$ |
| 2 | Clevios PT2 | 28.6 | $7.6 \times 10^{-5}$ |
| 3 | Clevios P HC V4 | 28.6 | $1.3 \times 10^{-3}$ |
| 4 | Clevios PH 500 | 28.6 | $4.4 \times 10^{-5}$ |
| 5 | Example 1 | 40.0 | $5.6 \times 10^{-2}$ |

Example 3: Addition of a polymeric binder 5 fold (according to the invention)

In a 100 ml beaker to 10 g of PEDOT/PSS dispersion (as obtained in Example 1) 10 g of water were added, followed by 2 g of Eastek 1200-2-30 (sulfonated polyester dispersion in water; 30 wt.-%). The resulting mixture contained 0.12 g of PEDOT/PSS solids and 0.6 g of polyester solids. The ratio of PEDOT/PSS to binder is 1 : 5. The mixture was stirred for 10 min. Subsequently a film was deposited on a PET substrate using a 12 μm wire blade. The film was dried for 10 min at 120°C. The sheet resistance of the film was determined to be $6 \times 10^3$ Ω/sq (formulation 6). The conductivity was determined to be 4.0 S/cm. The properties of formulation 6 were compared with those of a commercially available dispersion (Clevios PT 2) to which the same amount of polymeric binder has been added (formulations 7). The results are shown in table 3.

Table 3

| Formulation | PEDOT/PSS-type | PEDOT-content [wt.-%] | Conductivity [S/cm] |
|---|---|---|---|
| 6 | Example 1 | 40 | 4.0 |
| 7 | Clevios PT2 | 28.6 | 0.0042 |

**Claims**

**1.** A liquid composition comprising

i) particles comprising a complex of a polythiophene and a polyanion, and
ii) at least one solvent;

wherein

a) the liquid composition comprises at least 30 wt.-% of the polythiophene, based on the total weight of the polythiophene and the polyanion, and
b) the weight average particle diameter ($d_{50}$) of particles i) is in the range from 10 nm to 2,000 nm.

**2.** The liquid composition according to claim 1, wherein the liquid composition comprises less than 1,000 ppm of solvents having a boiling point (determined at 1,013.25 mbar) of more than 100°C, based on the total weight of the liquid composition.

**3.** The liquid composition according to claim 1 or 2, wherein the complex is a complex of poly(3,4-ethylenedioxythiophene) and an anion of polystyrene sulfonic acid (PEDOT/PSS).

**4.** The liquid composition according to anyone of claims 1 to 3, wherein a conductive layer prepared from the composition has a conductivity of at least 50 S/cm.

**5.** The liquid composition according to anyone of claims 1 to 4, wherein the liquid composition comprises water or a mixture of water and an alcohol selected from the group consisting of methanol, ethanol, n-propanol and isopropanol as solvent ii).

**6.** The liquid composition according to anyone of claims 1 to 5, wherein the liquid composition further comprises

iii) at least one further polymer being different from the polythiophene and the polyanion,

wherein the mass content of the at least one further polymer iii) in the liquid composition is at least 5 times larger than the total mass content of the polythiophene and the polyanion in the liquid composition.

**7.** The liquid composition according to claim 6, wherein a conductive layer prepared from the composition has a conductivity of at least 50 S/cm.

**8.** The liquid composition according to anyone of claims 1 to 8, wherein the liquid composition has a Z-value of more than 10,000 nm × S/cm, wherein Z is defined as follows:

$$Z = P \times C,$$

wherein P correponds to the weight average particle diameter ($d_{50}$) of particles i) (in [nm]) and C corresponds to the conductivity of a conductive layer prepared by coating the liquid composition onto the surface of a substrate and subsequently removing the at least one solvent i) by evaporation (in [S/cm]).

**9.** A process for the preparation of a liquid composition comprising the process steps of

I) providing a liquid reaction mixture comprising thiophene monomers, at least one polyanion, at least one oxidizing agent and the at least one solvent ii), wherein the reaction mixture comprises at least 30 wt.-% of the thiophene monomer, based on the total weight of the thiophene monomer and the polyanion;
II) oxidatively polymerizing the thiophene monomers in the presence of the polyanions, whereby a liquid composition is formed comprising particles i) that comprise a complex of a polythiophene and the polyanion;
III) optionally purification of the liquid composition obtained in process step II);
IV) optionally adjusting the solids content of the liquid composition obtained in process step II) or III);
V) optionally adding at least one further polymer iii) being different from the polythiophene and the polyanion and/or adding at least one additive iv) to the liquid composition obtained in process step II), III) or IV), preferably in process step III) or IV).

**10.** The process according to claim 9, wherein the complex that is formed in process step II) is a complex of poly(3,4-ethylenedioxythiophene) and an anion of polystyrene sulfonic acid (PEDOT/PSS).

**11.** The process according to claim 10, wherein in process step V) at least one further polymer iii) being different from the polythiophene and the polyanion is added to the liquid composition in such an amount that the mass content of the at least one further polymer iii) in the liquid composition is at least 5 times larger than the total mass content of the polythiophene and the polyanion in the liquid composition.

**12.** A liquid composition, obtainable by the process according to claim 10 or 11.

**13.** A process for the preparation of a layered body, comprising the process steps:

A) the provision of a substrate;
B) the application of the liquid composition according to one of claims 1 to 8 or 12 onto this substrate;
C) the at least partial removal of the at least one solvent ii) from the liquid composition to obtain a layered body comprising an electrically conductive layer coated onto the substrate.

**14.** A layered body, obtainable by the process according to claim 13.

**15.** Use of the liquid composition according to anyone of claims 1 to 8 or 12 for the production of a layered body comprising a substrate and an electrically conductive layer coated onto the substrate.

Europäisches Patentamt
European Patent Office
Office européen des brevets

# EUROPEAN SEARCH REPORT

Application Number
EP 16 19 6938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/260016 A1 (LOUWET FRANK [BE] ET AL) 23 December 2004 (2004-12-23)<br>* paragraphs [0006] - [0014]; claim 1; example 3; tables 7,9,17 *<br>----- | 1-15 | INV.<br>C08G61/12<br>H01B1/12<br>C08L65/00<br>C08L25/18 |
| X | ELSCHNER A ET AL: "HIGH-RESISTIVITY PEDT/PSS FOR REDUCED CROSSTALK IN PASSIVE MATRIX OELS",<br>ASIA DISPLAY / IDW'01. PROCEEDINGS OF THE 21ST INTERNATIONAL DISPLAY RESEARCH CONFERENCE IN CONJUCTION WITH THE 8TH INTERNATIONAL DISPLAY WORKSHOPS. NAGOYA, JAPAN, OCT. 16 - 19, 2001; [INTERNATIONAL DISPLAY RESEARCH CONFERENCE. IDRC], SAN JOSE, CA :,<br>vol. CONF. 21 / 8,<br>16 October 2001 (2001-10-16), pages 1427-1430, XP001134249,<br>* the whole document *<br>----- | 1-15 | |
| X | DATABASE WPI<br>Week 201512<br>Thomson Scientific, London, GB;<br>AN 2015-09186S<br>XP002769018,<br>-& JP 2015 017230 A (TOMIYAMA YAKUHIN KOGYO KK) 29 January 2015 (2015-01-29)<br>* abstract *<br>* paragraphs [0009], [0012] - [0019], [0050] - [0055], [0115]; examples 1,3,12,13 *<br>-----<br>-/-- | 1-15 | TECHNICAL FIELDS SEARCHED (IPC)<br>C08G<br>C08L<br>C09D<br>H01B<br>H01G |

The present search report has been drawn up for all claims

2

| Place of search | Date of completion of the search | Examiner |
|---|---|---|
| Munich | 11 April 2017 | Meiners, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 16 19 6938

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | LEFEBVRE M ET AL: "CHEMICAL SYNTHESIS, CHARACTERIZATION, AND ELECTROCHEMICAL STUDIES OF POLY(3,4-ETHYLENEDIOXYTHIOPHENE)/ POLY(STYRENE-4-SULFONATE) COMPOSITES", CHEMISTRY OF MATERIALS, AMERICAN CHEMICAL SOCIETY, US, vol. 11, 1 January 1999 (1999-01-01), pages 262-268, XP001069438, ISSN: 0897-4756, DOI: 10.1021/CM9804618 * abstract * * text section "Experimental Section" on page 263 - page 264 * | 1-15 | |
| X | KR 2015 0055960 A (CHEIL IND INC [KR]; SNU R&DB FOUNDATION [KR]) 22 May 2015 (2015-05-22) * paragraphs [0019] - [0022], [0058], [0068] - [0073]; claim 14; figures 1-3; example 1 * & KR 101 706 125 B1 (CHEIL IND INC [KR]; SNU R&DB FOUNDATION [KR]) 14 February 2017 (2017-02-14) | 1-8, 12-15 | TECHNICAL FIELDS SEARCHED (IPC) |
| X | JP 2012 102304 A (NAGASE CHEMTEX CORP) 31 May 2012 (2012-05-31) * paragraphs [0032], [0058] - [0069], [0093] - [0097]; claims 1,4,6 * | 1-15 | |
| X | US 2011/233450 A1 (NOBUTA TOMOKI [JP] ET AL) 29 September 2011 (2011-09-29) * paragraph [0081]; claims 1,3,4,8; examples 1,8-11; table 2 * | 1-15 | |
| X | US 2012/057275 A1 (INTELMANN MATTHIAS [DE] ET AL) 8 March 2012 (2012-03-08) * paragraphs [0073], [0074], [0104] - [0112]; example 1 * * example 1 * | 1-15 | |

The present search report has been drawn up for all claims

| Place of search | Date of completion of the search | Examiner |
|---|---|---|
| Munich | 11 April 2017 | Meiners, Christian |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 19 6938

This annex lists the patent family members relating to the patent documents cited in the above-mentioned European search report. The members are as contained in the European Patent Office EDP file on
The European Patent Office is in no way liable for these particulars which are merely given for the purpose of information.

11-04-2017

| Patent document cited in search report | Publication date | Patent family member(s) | Publication date |
|---|---|---|---|
| US 2004260016 A1 | 23-12-2004 | US 2004260016 A1 | 23-12-2004 |
| | | US 2008017833 A1 | 24-01-2008 |
| JP 2015017230 A | 29-01-2015 | NONE | |
| KR 20150055960 A | 22-05-2015 | NONE | |
| JP 2012102304 A | 31-05-2012 | CN 102559043 A | 11-07-2012 |
| | | JP 5740925 B2 | 01-07-2015 |
| | | JP 2012102304 A | 31-05-2012 |
| | | KR 20120052164 A | 23-05-2012 |
| | | TW 201224086 A | 16-06-2012 |
| US 2011233450 A1 | 29-09-2011 | CN 102199288 A | 28-09-2011 |
| | | DE 102011005950 A1 | 15-12-2011 |
| | | JP 5491246 B2 | 14-05-2014 |
| | | JP 2011202008 A | 13-10-2011 |
| | | KR 20110107748 A | 04-10-2011 |
| | | US 2011233450 A1 | 29-09-2011 |
| US 2012057275 A1 | 08-03-2012 | CN 102483997 A | 30-05-2012 |
| | | DE 102009007594 A1 | 12-08-2010 |
| | | EP 2404304 A1 | 11-01-2012 |
| | | EP 2750152 A1 | 02-07-2014 |
| | | JP 5592406 B2 | 17-09-2014 |
| | | JP 2012517113 A | 26-07-2012 |
| | | TW 201108277 A | 01-03-2011 |
| | | US 2012057275 A1 | 08-03-2012 |
| | | US 2015140203 A1 | 21-05-2015 |
| | | WO 2010089111 A1 | 12-08-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0339340 A2
- EP 0440957 A2
- WO 2014063825 A1


### Non-patent literature cited in the description


- **A. ELSCHNER ; S. KIRCHMEYER ; W. LÖVENICH ; U. MERKER ; K. REUTER.** PEDOT Principles and Applications of an Intrinsically Conductive Polymer. CRC Press, 2011
- **V. KABANOV.** *Russian Chemical Reviews,* 2005, vol. 74, 3-20
- **HOUBEN WEYL.** Methoden der organischen Chemie. *Makromolekulare Stoffe,* 1987, vol. E 20, 1141
- Handbook of Conducting Polymers. Marcel Dekker, 1986, vol. 1, 46-57
- **SCHLOTAN et al.** Bestimmung der Teilchengrößenverteilung von Latices mit der Ultrazentrifuge. *Kolloid-Z und Z Polymer,* 1972, vol. 250, 782
- **MÜLLER.** *Colloid & Polymer Science,* 1989, vol. 267, 1113